Europäisches Patentamt

European Patent Office

Office européen des brevets

(19)

(11) Veröffentlichungsnummer: **0 047 848**
**B1**

(12) # EUROPÄISCHE PATENTSCHRIFT

(45) Veröffentlichungstag der Patentschrift:
14.12.83

(51) Int. Cl.³: **G 05 D 16/20**

(21) Anmeldenummer: 81105934.4

(22) Anmeldetag: 28.07.81

(54) **Druckregelventil.**

(30) Priorität: 16.09.80 DE 3034865

(43) Veröffentlichungstag der Anmeldung:
24.03.82 Patentblatt 82/12

(45) Bekanntmachung des Hinweises auf die Patenterteilung:
14.12.83 Patentblatt 83/50

(84) Benannte Vertragsstaaten:
DE FR GB IT

(56) Entgegenhaltungen:
DE - A - 2 701 580
DE - A - 2 754 878
DE - B - 2 213 439

(73) Patentinhaber: ROBERT BOSCH GMBH, Postfach 50,
D-7000 Stuttgart 1 (DE)

(72) Erfinder: Heiser, Joachim, Bockelstrasse 92A,
D-7000 Stuttgart 75 (DE)
Erfinder: Leutner, Volkmar, Dipl.-Ing.,
Birchbuschstrasse 11, D-7251 Friolzheim (DE)

Druckregelventil

## Stand der Technik

Die Erfindung geht aus von einem Druckregelventil nach der Gattung des Hauptanspruchs. Es ist schon ein solches Druckregelventil aus der DE-A-2 701 580 bekannt, das mit hoher Genauigkeit arbeitet, indem die Stellung eines Ankers über einen elektromechanischen Wegaufnehmer abgegriffen wird und dieses Signal nach Vergleich mit einem Sollwertsignal in einem Differenzverstärker ein Steuersignal für einen Proportionalmagneten ergibt, dessen Anker über eine Messfeder auf den eigentlichen Ventilkegel einwirkt. Nachteilig bei dieser Lösung ist, dass der dem Ventilkegel zugeordnete Ventilkörper fest im Gehäuse angeordnet ist. Ventilkegel und Ventilkörper können hier nach langer Betriebsdauer verschleissen, worunter die Genauigkeit der Druckregelung nach längerer Zeit nachlässt. Auch hat diese Anordnung den Nachteil, dass sie empfindlich ist gegen Durchflussschwankungen. Ferner ergeben sich bei dieser Bauart Schwierigkeiten mit der Dämpfung bei unterschiedlichen Betriebszuständen und beim Senken des Druckes in Richtung Null. Da hier der Anker des Proportionalmagneten unmittelbar die Schliesskraft für den Ventilkegel aufbringen muss, benötigt der Magnet eine relativ grosse Kraft.

## Vorteile der Erfindung

Das erfindungsgemässe Druckregelventil mit den kennzeichnenden Merkmalen des Hauptanspruchs hat demgegenüber den Vorteil, dass es eine erheblich verbesserte Langzeitstabilität aufweist. So hat ein Verschleiss von Ventilkegel oder Ventilsitz keinen Einfluss mehr auf die Genauigkeit der Druckregelung, weil im Gegensatz zum vorbekannten Ventil hier die Kegel-Sitz-Partie im Vorwärtszweig des Lageregelkreises liegt und somit Längenänderungen durch Verschleiss und Durchflussänderungen gemessen und ausgeregelt werden können. Das Druckregelventil ist also auch unempfindlich gegen Schwankungen des Durchflusses. Unterstützt wird die gute Langzeitstabilität ferner dadurch, dass im Messpfad wenig Verschleissteile liegen, wodurch das Druckregelventil auch relativ einfach baut.

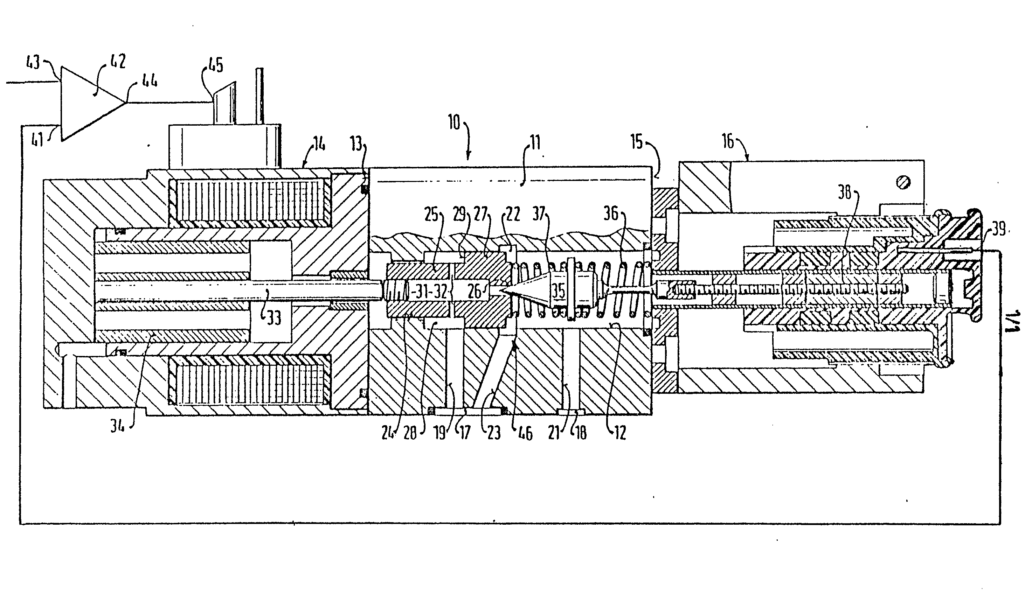

Durch die in den Unteransprüchen aufgeführten Massnahmen sind vorteilhafte Weiterbildungen und Verbesserungen des im Hauptanspruch angegebenen Druckregelventils möglich. Besonders vorteilhaft ist eine Ausbildung gemäss Anspruch 2, wodurch einerseits eine gute Dämpfung des Druckregelventils und andererseits eine verbesserte Drucksenkung in Nullage erreicht wird. Ferner ist eine Ausbildung gemäss Anspruch 3 zweckmässig, wodurch der Ventilkörper als Kraftverstärker für die Magnetkraft benutzt werden kann. Damit lässt sich die notwendige Magnetkraft relativ klein halten, während die Kraft der Messfeder und der wirksame Durchmesser am Ventilkegel verhältnismässig gross gewählt werden können. Dadurch wird das Druckregelventil steifer und neigt weniger zu Schwingungen. Weitere besonders vorteilhafte Ausgestaltungen ergeben sich aus den übrigen Ansprüchen, der Beschreibung und der Zeichnung.

Ein Ausführungsbeispiel der Erfindung ist in der Zeichnung dargestellt und in der nachfolgenden Beschreibung näher erläutert. Die einzige Figur zeigt einen Längsschnitt durch ein erfindungsgemässes Druckregelventil.

## Beschreibung des Ausführungsbeispiels

Die Figur zeigt ein Druckregelventil 10, das ein Gehäuse 11 mit einer Längsbohrung 12 aufweist. An einer Stirnseite 13 des Gehäuses 11 ist ein proportionalarbeitender Magnet 14 angeordnet. An der gegenüber liegenden Stirnseite 15 des Gehäuses 11 ist ein induktiv arbeitender, elektromechanischer Wegaufnehmer 16 angeflanscht. Das Gehäuse 11 weist einen ersten Anschluss 17 für gesteuerten Druck sowie einen zweiten Anschluss 18 für den Rücklauf auf. Vom ersten Anschluss 17 führt ein Querkanal 19 und vom zweiten Anschluss 18 ein entsprechender Querkanal 21 in die Längsbohrung 12. Im Bereich zwischen den Querkanälen 19, 21 ist in der Längsbohrung 12 eine Ringkammer 22 ausgebildet, die über eine Querbohrung 23 ebenfalls mit dem ersten Anschluss 17 Verbindung hat. Im Bereich zwischen Stirnseite 13 und Ringkammer 22 ist die Längsbohrung 12 durch einen Bund 24 abgesetzt. In der abgesetzten Längsbohrung 12 ist ein Ventilkörper 25 dicht und gleitend geführt. An seinem einen Ventilsitz 26 aufweisenden Ende hat der Ventilkörper 25 einen Kolbenabschnitt 27, der zusammen mit dem Bund 24 in der Längsbohrung 12 einen Ringraum 28 begrenzt. Auf diese Weise ist am Ventilkörper 25 eine vom Druck im Ringraum 28 beaufschlagte Differenzfläche 29 am Kolbenabschnitt 27 ausgebildet. In seinem Innern weist der Ventilkörper 25 eine mit dem Ventilsitz 26 verbundene Axialbohrung 31 auf, von der eine Dämpfungsdrossel 32 in den Ringraum 28 führt. In die Axialbohrung 31 ist ein Stopfen dicht eingeschraubt, an dem ein mit einem Anker 34 im Magneten 14 fest verbundener Stössel 33 anliegt. Der Raum zwischen dem Ventilkörper 25 und dem Magneten ist mit dem Rücklauf 18 verbunden.

Ferner ist in der Längsbohrung 12 im Bereich zwischen Ventilkörper 25 und Stirnseite 15 ein Ventilkegel 35 angeordnet, der dem Ventilsitz 26 zugeordnet ist. Eine den Ventilkegel 35 belastende Messfeder 36 stützt sich an der Stirnseite des Wegaufnehmers 16 ab und drückt den Ventilkegel 35 in Richtung auf den Ventilkörper 25. Entgegen der Messfeder 36 wirkt eine zweite Feder 37, die sich einerseits am Ventilkegel 35 und andererseits am Kolbenabschnitt 27 abstützt. Die zweite Feder 37 ist wesentlich schwächer ausgebildet als die Messfeder 36. Der Ventilkegel 35 ist unmittelbar mechanisch mit dem beweglichen Teil 38, der als Ferritkern ausgebildet ist, im Wegaufnehmer 16 verbunden. Der elektrische Ausgang 39 des Wegaufnehmers 16 ist mit einem Eingang 41 eines Differenzverstärkers 42 verbunden, an dessen anderen Eingang 43 das Sollwertsignal angelegt wird. Ein Ausgang 44 des Differenzverstärkers 42 ist mit dem elektrischen Eingang 45 des Magneten 14 verbunden.

Die Querbohrung 23 und die Ringkammer 22 bilden Teile einer vom Anschluss 17 zum Anschluss 18 führenden Verbindung 46, die vom Kolbenabschnitt 27 des Ventilkörpers 25 steuerbar ist und die parallel zu einer Verbindung über die Dämpfungsdrossel 32 geführt ist.

Die Wirkungsweise des Druckregelventils 10 wird wie folgt erläutert: Liegt am Eingang 43 des Differenzverstärkers 42 das Sollwertsignal 0 an, so wird der Proportional-Magnet 14 nicht erregt. Die zweite Feder 37, die wesentlich schwächer ausgebildet ist als die Messfeder 36 und entgegen letzterer auf den Ventilkegel 35 wirkt, sorgt nun dafür, dass unterhalb des Arbeitsbereiches der Messfeder 36 der Ventilkörper 25 und über den Stössel 33 der Anker 34 in den Leerhubbereich des Magneten 14 gedrückt wird. In dieser Stellung hebt der Ventilkegel 35 vollständig vom Ventilsitz 26 im Ventilkörper 25 ab. Zugleich steuert in dieser Stellung der Kolbenabschnitt 27 die Verbindung 46 vom ersten Anschluss 17 zum zweiten Anschluss 18 auf. Im ersten Anschluss 17 steht das Druckmittel an, dessen Druck stetig und proportional zur Grösse des Sollwertsignals am Eingang 43 des Differenzverstärkers 42 geregelt werden soll. Der in den Anschluss 17 fliessende Druckmittelstrom ist stromaufwärts durch eine Drossel oder ein Stromregelventil in seiner Grösse begrenzt. Bei unbestromtem Magneten fliesst der Druckmittelstrom nahezu ohne Druckabfall über die Querbohrung 23, die Ringkammer 22, die Längsbohrung 12 und den Querkanal 21 zum zweiten Anschluss 18 und damit zum Rücklauf. Die Wirkung der für die Stabilisierung des Gesamtsystems notwendigen Dämpfungsdrossel 32 ist hierbei ausgeschaltet. Das Druckregelventil 10 kann somit bei einem Sollwertsignal 0 den Druck im ersten Anschluss 17 auf einen tieferen Wert senken, als dies bei bisherigen Bauarten möglich war.

Wird nun mit einem Sollwertsignal am Eingang 43 des Differenzverstärkers 42 der tiefste, einstellbare Druck des Druckregelventils 10 vorgegeben, so erhält der Magnet 14 infolge des davon abweichenden Istwertsignals am Eingang 41 solange ein Stellsignal an seinem elektrischen Eingang 45, bis der Ventilkörper 25 vom Anker 34 von links nach rechts – bezogen auf die Figur – in seine Arbeitsstellung verschoben wird. In dieser Arbeitsstellung steuert der Kolbenabschnitt 27 des Ventilkörpers 25 die Ringkammer 22 zu. Der im ersten Anschluss 17 herrschende Druck kann sich somit nur noch über den Querkanal 19, den Ringraum 28, die Dämpfungsdrossel 32, die Axialbohrung 31, den Ventilsitz 26, vorbei am Ventilkegel 35 und über die Längsbohrung 12 und den Querkanal 21 zum zweiten Anschluss 18 abbauen. Hierbei bildet der Ventilkegel 35 mit dem Ventilsitz 26 eine Drosselstelle. Die an dieser Drosselstelle entstehende Druckdifferenz wirkt über die Angriffsfläche des Ventilkegels 35 als eine druckproportionale Kraft auf die Messfeder 36. Die Messfeder 36, deren Hub dem Arbeitshubbereich des Magneten 14 entspricht, erfährt hierbei eine druckproportionale Längenänderung. Letztere führt zu einer entsprechenden Hubänderung des Ferritkernes 38 im Wegaufnehmer 16, die am elektrischen Ausgang 39 als entsprechendes elektrisches Signal abnehmbar ist. Dieses wegabhängige Istwertsignal am Ausgang 39 wird im Differenzverstärker 42 mit dem Sollwert verglichen; aus der Differenz dieser Signale bildet der Verstärker 42 ein Gleichstromsignal zur Ansteuerung des Proportional-Magneten 14. Der Magnet 14 verschiebt nun über den Anker 34 und den Stössel 33 den Ventilkörper 25 so lange gegen die Kraft der Messfeder 36 nach rechts, bis der gemessene Druck dem Sollwert entspricht.

Aus der vorstehend beschriebenen Funktion ergibt sich, dass die relative Lage des Ventilkegels 35 zum Ventilkörper 25 keine Rolle bei der Druckmessung spielt. Der geregelte Druck wird einzig und allein über die Veränderung der Länge der Messfeder 36 ermittelt. Eine Abnützung am Ventilkegel 35 oder ein Einschlagen am Ventilsitz 26 haben keinen Einfluss mehr auf die Genauigkeit der Drucksteuerung. In einem solchen Fall wird lediglich der Anker 34 des Magneten 14 den Ventilkörper 25 automatisch in eine andere Position stellen. In gleicher Weise ist ein veränderlicher Durchfluss ohne Belang. Der bei einem veränderlichen Druchfluss veränderte Ventilhub führt nicht zu einer anderen Federkraft, sondern nur zu einer anderen Position des Ventilkörpers 25. Das Druckregelventil 10 arbeitet somit nicht nur stabil, sondern weist vor allem eine hohe Langzeitstabilität auf und ist unempfindlich gegen Schwankungen des Durchflusses.

Der Ventilkörper 25 arbeitet darüber hinaus auch als Kraftverstärker für die Magnetkraft. Zu diesem Zweck wirkt der im ersten Anschluss 17 geregelte Druck im Ringraum 28 auf die Differenzfläche 29 am Kolbenabschnitt 27. In proportionaler Abhängigkeit zum geregelten Druck steigt damit auch die axiale Kraft auf den Ventilkörper 25 in Wirkrichtung der vom Anker 34 aufgebrachten Kraft. Je nach Grösse der Differenzfläche 29 ergibt sich dadurch eine Kraftverstärkung des Magneten 14. Aufgrund dieser Bauweise kann selbst bei relativ kleinen Magnetkräften der wirksame Durchmesser an Ventilkegel 35 und die Kraft der Messfeder 36 gross gehalten werden. Durch eine solche Ausbildung wird das Druckregelventil 10 steifer und neigt weniger zu Schwingungen.

Durch die Ausbildung des Ventilkegels 35 als Druckaufnehmer in Verbindung mit einem durch einen Proportional-Magnet axial verstellbaren Ventilkörper 25 ergibt sich ein besonders vorteilhaftes Druckregelventil 10, wobei der Ventilkörper 25 über seinen Axialhub mehrere Funktionen ausübt. Insbesondere kann er die Schliesskraft geregelt variieren, die Verbindung 46 steuern und darüber hinaus als Kraftverstärker für die Magnetkraft wirken. Das Druckregelventil 10 vereinigt daher eine Reihe von Vorteilen gleichzeitig in sich: Es erzielt eine gute Dämpfung, weist eine hohe Langzeitstabilität auf, ist unempfindlich gegen Änderungen der Durchflussmenge, kommt mit relativ kleiner Magnetkraft aus, ermöglicht eine wirksame Drucksenkung in Null-Lage und baut zudem mit wenig Verschleissteilen im Messpfad. Das Druckregelventil 10 stellt daher auch eine besonders vorteilhafte Kombination von Merkmalen dar.

Selbstverständlich sind Änderungen an der gezeigten Ausführungsform des Druckregelventils möglich, ohne vom Gedanken der Erfindung abzuweichen.

**Patentansprüche**

1. Druckregelventil (10) zur Steuerung des fluidischen Drucks in einem Anschluss (17) proportional zu einem elektrischen Sollwertsignal mit einem von einer Messfeder (36) entgegen dem fluidischen Druck belasteten Ventilkegel (35), dem ein einen Ventilsitz (26) aufweisender Ventilkörper (25) zugeordnet ist, mit einem proportional arbeitenden Magneten (14), dessen elektrischer Eingang mit dem Ausgang eines elektrischen Differenzverstärkers (42) verbunden ist, dessen Eingängen das Sollwertsignal und das Ausgangssignal eines Wegaufnehmers (16) eingegeben werden, dadurch gekennzeichnet, dass die Messfeder (36) gehäusefest abgestützt ist und der Ventilkegel (35) mit dem beweglichen Teil (38) des Wegaufnehmers (16) verbunden ist und dass der Ventilkörper (25) im Gehäuse (11) beweglich gelagert und vom Anker (34) des Magneten (14) entgegen der Kraft der Messfeder (36) verstellbar ist.

2. Druckregelventil nach Anspruch 1 mit einem am Ventilkörper (25) ausgebildeten Ventilsitz (26), dadurch gekennzeichnet, dass zwischen Ventilkörper (25) und Ventilkegel (35) eine zweite Feder (37) angeordnet ist, die schwächer als die erste Messfeder (36) ausgebildet ist, dass in die Verbindung zwischen dem Anschluss (17) für gesteuerten Druck und dem Ventilsitz (26) eine Dämpfungsdrossel (32) geschaltet ist und dass vom gesteuerten Anschluss (17) zu einem zweiten Anschluss (18) für den Rücklauf eine Verbindung (46) parallel zur Dämpfungsdrossel (32) führt, die vom Ventilkörper (25) steuerbar ist.

3. Druckregelventil nach Anspruch 1 oder 2, dadurch gekennzeichnet, dass am Ventilkörper (25) eine Differenzfläche (29) ausgebildet ist, die vom Druck im gesteuerten Anschluss (17) beaufschlagt wird und den Ventilkörper (25) gegen die Kraft der Messfeder (36) belastet.

4. Druckregelventil nach Anspruch 2 oder 3, dadurch gekennzeichnet, dass der Ventilkörper (25) in einer Längsbohrung (12) des Gehäuses (11) geführt ist und in seinem Innern eine mit dem Ventilsitz (26) verbundene Bohrung (31) aufweist, in welche die im Ventilkörper (25) angeordnete Dämpfungsdrossel (32) mündet.

5. Druckregelventil nach Anspruch 4, dadurch gekennzeichnet, dass der Ventilkörper (25) an seinem den Ventilsitz (26) aufweisenden Ende einen Kolbenabschnitt (27) aufweist, der die Differenzfläche (29) bildet und der die parallel zur Dämpfungsdrossel (32) vom gesteuerten Anschluss (17) zum Rücklaufanschluss (18) geführte Verbindung (46) steuert.

6. Druckregelventil nach einem der Ansprüche 2 bis 5, dadurch gekennzeichnet, dass die zweite Feder (37) bei nicht erregtem Magneten (14) den Ventilkörper (25) im Leerhubbereich des Magneten (14) in eine Ruhestellung drückt, in der die Verbindung (46) aufgesteuert ist.

7. Druckregelventil nach einem der Ansprüche 1 bis 6, dadurch gekennzeichnet, dass der Ventilkörper (25) mit dem Anker (34) des Magneten (14) und der Ventilkegel (35) mit dem beweglichen Teil (38) des Wegaufnehmers (16) jeweils unmittelbar mechanisch in Wirkverbindung stehen.

8. Druckregelventil nach einem der Ansprüche 1 bis 7, dadurch gekennzeichnet, dass der Wegaufnehmer (16) und der Magnet (14) auf entgegengesetzten Stirnseiten (13, 15) des Gehäuses (11) angeordnet sind, das den Ventilkörper (25) und den Ventilkegel (35) mit den beiden Federn (36, 37) in seinem Innern aufnimmt.

**Revendications**

1. Vanne de réglage de pression (10) pour établir dans un orifice de raccordement (17) une pression de fluide proportionnelle à un signal électrique de valeur de consigne, comprenant un cône mobile (35) formant clapet, qui est chargé par un ressort de mesure (36) contre la pression du fluide et est combiné avec un obturateur (25) présentant un siège de soupape (26), de même qu'un électro-aimant (14) à action proportionnelle, dont l'entrée électrique est connectée à la sortie d'un amplificateur différentiel électrique (42), dont les entrées reçoivent le signal de valeur de consigne et le signal de sortie d'un capteur de déplacement (16), caractérisée en ce que le ressort de mesure (36) s'appuie sur le corps ou sur un élément solidaire du corps (11) de la vanne et le cône (35) est relié à la partie mobile (38) du capteur de déplacement (16) et en ce que l'obturateur (25) est disposé mobile dans le corps (11) et est déplaçable par l'armature (34) de l'électro-aimant (14) contre la force du ressort de mesure (36).

2. Vanne selon la revendication 1, caractérisée en ce qu'un second ressort (37) plus faible que le ressort de mesure (36) est disposé entre l'obturateur (25) et le cône (35), qu'un étranglement d'amortissement (32) est intercalé dans la liaison entre l'orifice de raccordement (17) pour la pression réglée et le siège de soupape (26) et que l'orifice réglé (17) est relié à un secon orifice de raccordement (18), pour le retour, par une liaison (46) parallèle à l'étranglement d'amortissement (32) et contrôlée par l'obturateur (25).

3. Vanne selon la revendication 1 ou 2, caractérisée en ce que l'obturateur (25) présente une face différentielle (29), sur laquelle agit la pression régnant dans l'orifice de raccordement réglé (17), dans le sens du déplacement de l'obturateur (25) contre la force du ressort de mesure (36).

4. Vanne selon la revendication 2 ou 3, caractérisée en ce que l'obturateur (25) est guidé dans un alésage longitudinal (12) du corps (11) et est pourvu intérieurement d'un perçage (31) qui communique avec le siège de soupape (26) et dans lequel débouche l'étranglement d'amortissement (32) disposé dans l'obturateur (25).

5. Vanne selon la revendication 4, caractérisée en ce que l'obturateur (25) présente, à son extrémité portant le siège de soupape (26), une portion formant piston (27), qui définit la face différentielle (29) et qui commande la liaison (46) menant de l'orifice de raccordement réglé (17) à l'orifice de retour (18) et parallèle à l'étranglement d'amortissement (32).

6. Vanne selon une des revendications 2 à 5, caractérisée en ce que le second ressort (37) pousse l'obturateur (25) à une position de repos dans la zone de course à vide de l'électro-aimant (14) lorsque celui-ci n'est pas excité, position où la liaison (46) est ouverte.

7. Vanne selon une des revendications 1 à 6, caractérisée en ce que l'obturateur (25) est relié directement et mécaniquement à l'armature (34) de l'électro-aimant (14) et que le cône (35) est relié de façon analogue à la partie mobile (38) du capteur de déplacement (16).

8. Vanne selon une des revendications 1 à 7, caractérisée en ce que le capteur de déplacement (16) et l'électro-aimant (14) sont disposés sur des faces d'extrémité opposées (13, 15) du corps (11), à l'intérieur duquel sont disposés l'obturateur (25) et le cône (35) avec les deux ressorts (36, 37).

**Claims**

1. A pressure regulating valve (10) for the control of the fluid pressure in a connection (17) proportional to an electrical set value signal comprising a valve cone (35) loaded by a measuring spring (36) against the fluid pressure and with which is associated a valve member (25) having a valve seat (26), a proportionally acting magnet (14) the electrical input to which is connected to the output from an electrical differential amplifier (42) to the inputs of which are delivered the set value signal and the output signal from a displacement receiver (16), characterised in that, the measuring spring (36) is rigidly supported by the housing and the valve cone (35) is connected to the movable portion (38) of the displacement receiver (16) and that the valve member (25) is movably mounted in the housing (11) and is adjustable by the armature (34) of the magnet (14) against the force of the measuring spring (36).

2. A pressure regulating valve according to claim 1, comprising a valve seat (26) formed on the valve member (25), characterised in that, a second spring (37), which is made weaker than the first measuring spring (36), is arranged between the valve member (25) and the valve cone (35), that a damping throttle (32) is arranged in the communication between the connection (17) for controlled pressure and the valve seat (26) and that a communication (46) which is controllable by the valve member (25) leads from the controlled connection (17) to a second connection (18) for the return parallel to the damping throttle (32).

3. A pressure regulating valve according to claim 1 or 2, characterised in that, a differential area (29) is formed on the valve member (25), is influenced by the pressure in the controlled connection (17) and loads the valve member (25) against the force of the measuring spring (36).

4. A pressure regulating valve according to claim 2 or 3, characterised in that, the valve member (25) is guided in a longitudinal bore (12) in the housing (11) and has in its interior a bore (31) connected to the valve seat (26) and into which issues the damping throttle (32) arranged in the valve member (25).

5. A pressure regulating valve according to claim 4, characterised in that, at its end provided with the valve seat (26) the valve member (25) has a piston section (27) which forms the differential area (29) and which controls the communication (46) leading from the controlled connection (17) to the return connection (18) parallel to the damping throttle (32).

6. A pressure regulating valve according to one of claims 2 to 5, characterised in that, when the magnet (14) is not energised, the second spring (37) urges the valve member (25) in the idle region of the stroke of the magnet (14) into a rest position in which the communication (46) is opened.

7. A pressure regulating valve according to one of claims 1 to 6, characterised in that, the valve member (25) together with the armature (34) of the magnet (14) and the valve cone (35) are each in direct mechanical operative association with the movable portion (38) of the displacement receiver (16).

8. A presssure regulating valve according to one of claims 1 to 7, characterised in that, the displacement receiver (16) and the magnet (14) are arranged at opposite ends (13, 15) of the housing (11) which accommodates within its enterior the valve member (25) and the valve cone (35) together with the two springs (36, 37).